# EUROPEAN PATENT APPLICATION

(11) **EP 2 832 604 A1**
(43) Date of publication of application: **04.02.2015**
(21) Application number: 14175508.2
(22) Date of filing: 03.07.2014
(51) Int. Cl.: B60W 10/02, B60W 10/06, B60W 30/19, F16H 59/46, F16H 63/46, F16D 48/06

(54) **Driving apparatus for vehicle**

(30) Priority: 30.07.2013 JP 2013158309
(71) Applicant: AISIN SEIKI KABUSHIKI KAISHA, Kariya-shi, Aichi 448-8650 (JP)
(72) Inventor: Murakami, Yoshihiro, Kariya-shi, Aichi 448-8650 (JP); Harada, Shinya, Kariya-shi, Aichi 448-8650 (JP); Mori, Kyosuke, Kariya-shi, Aichi 448-8650 (JP)
(74) Representative: Kramer Barske Schmidtchen Patentanwälte PartG mbB

(57) **Abstract**

A driving apparatus (100) for a vehicle includes a transmission mechanism (30) including a plurality of gear sets having different gear ratios and being positioned between an input shaft (32a, 32b) and an output shaft (37), a clutch (20) changing a transmission state of a rotation torque between the input shaft (32a, 32b) of the transmission mechanism (30) and a driving shaft (12) to which the rotation torque is supplied from a driving source (10), and a control portion (31) establishing the torque transmission state between the input shaft (32a, 32b) and the output shaft (37) by connecting the input shaft (32a, 32b) to a gear (33', 34a, 34b, 34c, 34d, 34e, 34f, 34r, 35a, 35b, 35c, 35d, 35e, 35f, 35r, 38) configuring the gear set.

## Description

### TECHNICAL FIELD

This disclosure generally relates to a driving apparatus for a vehicle.

### BACKGROUND DISCUSSION

A known driving apparatus for a vehicle is disclosed in JP2011-218890A (hereinafter referred to as Patent reference 1). According to the known driving apparatus disclosed in Patent reference 1, in a state where a gear shift operation is intended, a rotation speed of an input shaft needs to increase up to a predetermined rotation speed which allows the input shaft to connect to a gear to be shifted to. Thus, a technology disclosed in Patent reference 1 for engaging a clutch to increase the rotation speed of the input shaft using drive force of an engine, and the technology for connecting the input shaft to the gear after disengaging the clutch in a state where the rotation speed of the input shaft reaches the rotation speed which allows the input shaft to connect to the gear is proposed.

However, in a state where the rotation speed of the input shaft increases by increasing the rotation speed of the engine after the clutch is engaged, it takes long time to increase the rotation speed of the input shaft up to the rotation speed which allows the input shaft to connect to the gear, resulting in that the connection of the input shaft with the gear consumes time.

A need thus exists for a driving apparatus for a vehicle which is not susceptible to the drawback mentioned above.

### SUMMARY

According to an aspect of this disclosure, a driving apparatus for a vehicle includes a transmission mechanism including a plurality of gear sets having different gear ratios and being positioned between an input shaft and an output shaft, the transmission mechanism switching a torque transmission state where the torque is transmitted between the input shaft and the output shaft, and a torque non-transmission state where the torque is not transmitted between the input shaft and the output shaft for each set of the gear sets, a clutch changing a transmission state of a rotation torque between the input shaft of the transmission mechanism and a driving shaft to which the rotation torque is supplied from a driving source, and a control portion establishing the torque transmission state between the input shaft and the output shaft by connecting the input shaft to a gear configuring the gear set while increasing a rotation speed of the input shaft to be greater than a rotation speed of the driving shaft by an inertial force generated at the input shaft by establishing a state where the rotation torque is not transmitted from the driving shaft to the input shaft before the rotation speed of the input shaft accords with the rotation speed of the driving shaft after establishing a state where the rotation torque is transmitted from the driving shaft to the input shaft using the clutch in a state where the control portion increases the rotation torque transmitted via the driving shaft after establishing the state where the rotation torque is not transmitted from the driving shaft to the input shaft using the clutch at the transmission mechanism.

According the aforementioned disclosure, as one of the examples, the input shaft and the output shaft may be brought into the torque transmission state by connecting the input shaft to the gear in a reduced time.

According to another aspect of this disclosure, the transmission mechanism includes a dog clutch in a gear meshing mechanism wherein at least one of the selected gears configuring the gear set is rotatably supported by the input shaft or the output shaft, and the gear meshing mechanism wherein the one rotatable gear is connected to the input shaft or to the output shaft to switch from the torque non-transmission state to the torque transmission state.

According to the aforementioned disclosure, as one of the examples, the rotation speed of the dog clutch may accord with the rotation speed of the gear so that the dog clutch may engage with the gear. Accordingly, inertia due to the rotation difference between the dog clutch and the gear may be reduced and the vehicle may be prevented from shaking.

According to further aspect of this disclosure, the control portion establishes the state where the rotation torque is transmitted between the driving shaft and the input shaft using the clutch in a case where the rotation speed of the driving shaft reaches a rotation speed which allows the driving shaft to transmit the rotation torque to the gear configuring the gear set, the gear being connected to the input shaft after connecting the gear configuring the gear set to the input shaft.

According to the aforementioned disclosure, as one of the examples, because the clutch may be engaged to transmit the rotation torque after the rotation speed of the driving shaft accords with the rotation speed of the input shaft. Accordingly, the clutch is prevented from being wearing out.

According to still another aspect of this disclosure, the control portion controls the gear configuring the gear set to connect to the input shaft when the rotation speed of the input shaft reaches the rotation speed which allows the input shaft to connect to the gear configuring the gear set while increasing the rotation speed of the input shaft by the inertial force generated at the input shaft by establishing the state where the rotation torque is not transmitted from the driving shaft to the input shaft.

According to the aforementioned disclosure, as one of the examples, the input shaft and the output shaft may be brought into the torque transmission state by connecting the input shaft to the gear in a reduced time.

According to the further aspect of this disclosure, the control portion controls the gear configuring the gear set to connect to the input shaft when the rotation speed of the input shaft reaches the rotation speed which allows the input shaft to connect to the gear configuring the gear set while decreasing the rotation speed of the input shaft after increasing by the inertial force generated at the input shaft by establishing the state where the rotation torque is not transmitted from the driving shaft to the input shaft.

According to the aforementioned disclosure, as one of the examples, the input shaft and the output shaft may be brought into the torque transmission state by connecting the input shaft to the gear in a reduced time.

According to still another aspect of this disclosure, the control portion transmits the rotation torque by slipping the clutch in a state where the control portion establishes the state where the rotation torque is transmitted from the driving shaft to the input shaft using the clutch after increasing the rotation torque transmitted via the driving source.

According to the aforementioned disclosure, as one of the examples, because the rotation speed of the input shaft which is different from the rotation speed of the driving shaft may favorably increase. Accordingly, the clutch may be easily engaged.

According to further aspect of this disclosure, the control portion controls the clutch to slip in a state where the input shaft is in a free-rotational state when downshifting the gear in a case where the control portion increases the rotation torque transmitted via the input shaft.

According to the aforementioned disclosure, as one of the examples, because the rotation speed of the input shaft which is different from the rotation speed of the driving shaft may favorably increase. Accordingly, the clutch may be easily engaged.

According to another aspect of this disclosure, the control portion controls the clutch to be engaged so as to increase a first gradient showing an acceleration of the rotation speed of the input shaft to be greater than a second gradient showing an acceleration of the rotation speed of the driving shaft.

According to the aforementioned disclosure, as one of the examples, the input shaft and the output shaft may be brought into the torque transmission state by connecting the input shaft to the gear in a reduced time.

According to still further aspect of this disclosure, the control portion controls the clutch to be disengaged before the rotation speed of the input shaft accords with the rotation speed of the driving shaft.

According to the aforementioned disclosure, as one of the examples, the input shaft and the output shaft may be brought into the torque transmission state by connecting the input shaft to the gear in a reduced time.

According to another aspect of this disclosure, the control portion controls the selected gear configuring the gear set to connect to the input shaft in a case where the rotation speed of the input shaft decreases after increasing to a maximum degree in a case where the control portion increases the rotation torque transmitted via the input shaft by slipping the clutch temporarily and establishes the torque transmission state.

According to the aforementioned disclosure, as one of the examples, the input shaft and the output shaft may be brought into the torque transmission state by connecting the input shaft to the gear in a reduced time.

### BRIEF DESCRIPTION OF THE DRAWINGS

The foregoing and additional features and characteristics of this disclosure will become more apparent from the following detailed description considered with the reference to the accompanying drawings, wherein:
Fig. 1 shows a figure of a structure of a driving apparatus for a vehicle of an embodiment disclosed here;
Fig. 2 shows a block diagram illustrating a software configuration which is provided by a transmission ECU of the embodiment;
Fig. 3 shows a first timing chart of the driving apparatus for the vehicle of the embodiment illustrating a control which is operated in a down-shift operation;
Fig. 4 shows a second timing chart of the driving apparatus for the vehicle of the embodiment illustrating the control which is operated in the down-shift operation; and
Fig. 5 shows a flowchart of the driving apparatus for the vehicle of the embodiment illustrating a process for controlling the down-shift operation.

### DETAILED DESCRIPTION

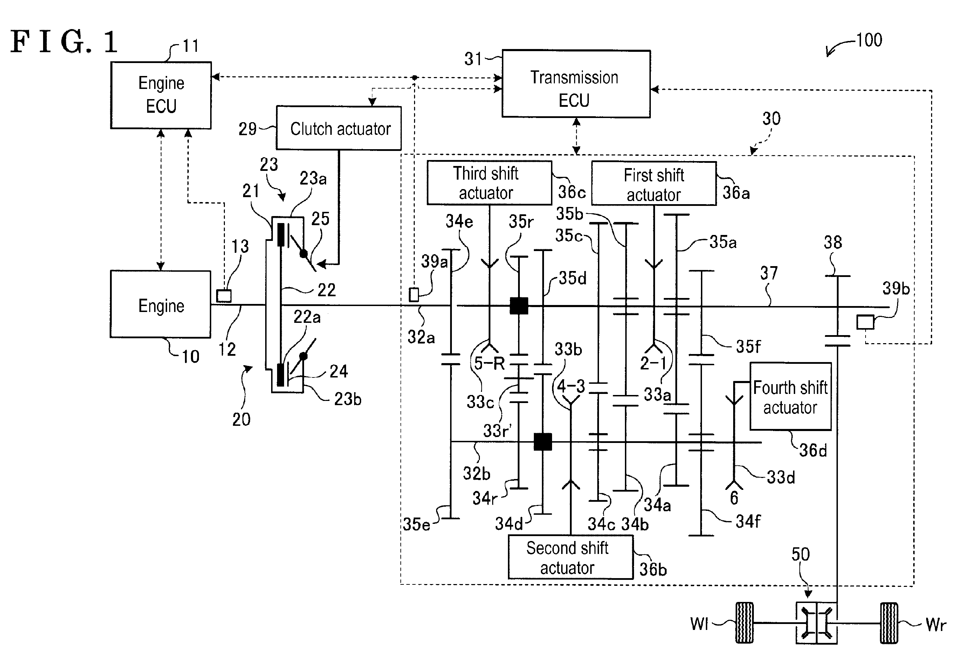

As shown in Fig. 1, a driving apparatus 100 for a vehicle of an embodiment includes an engine 10 (serving as a driving source), an engine electric control unit, or engine ECU 11, a clutch 20, a transmission 30 (serving as a transmission mechanism) and a transmission electric control unit, or transmission ECU 31 (serving as a control portion).

The engine 10 corresponds to, for example, a gasoline engine or a diesel engine which use hydrocarbon fuel, for example, gasoline and gas oil or diesel oil, and outputs rotation torque. The rotation torque outputted by the engine 10 is transmitted to a driving shaft 12.

The engine ECU 11 controls the engine 10. An engine rotation speed sensor 13 is provided at, or close to the driving shaft 12, and detects a rotation speed of the driving shaft 12, in other words, the rotation speed of the engine 10. The engine rotation speed sensor 13 is communicably connected to the engine ECU 11 and outputs the detected rotation speed of the engine 10 to the engine ECU 11.

The clutch 20 is provided between the driving shaft 12 and a first input shaft 32a (serving as an input shaft) of the transmission 30, and serves as a clutch that changes, by using electric control, rotation transmission state (between the engagement and disengagement) between the first input shaft 32a of the transmission 30 and the driving shaft 12 to which the rotation torque is supplied from the engine 10 (driving source). Accordingly, the clutch 20 controls the transmission of torque transmitted between the driving shaft 12 and the first input shaft 32a. According to the embodiment, the clutch 20 corresponds to a dry-type single-plate normally-closed clutch, and includes a flywheel 21, a clutch disc 22, a clutch cover 23, a pressure plate 24 and a diaphragm spring 25. The flywheel 21 corresponds to a disc plate which includes a predetermined mass, and integrally rotates with the driving shaft 12 because the flywheel 21 is connected to the driving shaft 12. The clutch disc 22 is formed in a disc shape that is provided with a friction member 22a at an outer edge portion of the clutch disc 22, and faces the flywheel 21 so as to selectively contact with each other. The clutch disc 22 connects to and integrally rotates with the first input shaft 32a.

The clutch cover 23 is connected to an outer edge of the flywheel 21, and is configured with a cylinder portion 23a and an annular plate-shaped side circumferential wall 23b. The cylinder portion 23a is provided at an outer circumference of the clutch disc 22. The side circumferential wall 23b extends from an edge portion of the cylinder portion 23a which is positioned at an opposite side to a connection portion of the clutch cover 23 and the flywheel 21 to an inner side of the clutch cover 23 in a radial direction. The pressure plate 24 is formed in the annular plate-shape and is positioned to face the clutch disc 22 so as to selectively contact with each other at an opposite side to an opposing surface of the pressure plate 24 against the flywheel 21.

The diaphragm spring 25 is a type of, so-called disc spring, and includes a diaphragm which is inclined in a thickness direction of the diaphragm spring 25. A middle portion of the diaphragm spring 25 in the radial direction is in contact with an inner edge of the side circumferential wall 23b of the clutch cover 23 and an outer edge of the diaphragm spring 25 is in contact with the pressure plate 24. The diaphragm spring 25 pushes the clutch disc 22 toward the flywheel 21 via the pressure plate 24. In such a state, the friction member 22a of the clutch disc 22 is pushed by the flywheel 21 and by the pressure plate 24. Then, the clutch disc 22 and the flywheel 21 integrally rotate with each other by friction force generated between the friction member 22a, the flywheel 21, and the pressure plate 24 to connect the driving shaft 12 to the first input shaft 32a.

A clutch actuator 29 operates the engagement and the disengagement of the clutch 20 in accordance with the driving control by the transmission ECU 31. In addition, the clutch actuator 29 may desirably change the transmission of the torque between the clutch disc 22 and the flywheel 21 in accordance with the control by the transmission ECU 31. Any types of the clutch actuator 29 may be applied, and for example, an electric motor type or an oil pressure type of the clutch actuator may be conceivably used.

The clutch actuator 29 of the embodiment is configured to selectively apply the pressure of an inner edge portion of the diaphragm spring 25 towards the flywheel 21 and changes the transmission of the torque via the clutch 20. In a state where the clutch actuator 29 operates to push the inner edge portion of the diaphragm spring 25 towards the flywheel 21, the diaphragm spring 25 deflects and the outer edge of the diaphragm spring 25 deflects in a direction being away from the flywheel 21. Accordingly, the pressing force applied by flywheel 21 and the pressure plate 24 to push the clutch disc 22 gradually decreases because of the deflection of the diaphragm spring 25, and the torque transmitted between the clutch disc 22 and the flywheel 21 gradually decreases, and the driving shaft 12 and the first input shaft 32a are separated from each other.

The transmission 30 is provided with plural gear sets 34a, 34b, 34c, 34d, 34e, 34r, 35a, 35b, 35c, 35d, 35e, 35r which include different gear ratios between the first input shaft 32a, a second input shaft 32b (serving as an input shaft) and an output shaft 37, and switches a torque transmission state where the torque is transmitted between the first input shaft 32a, the second input shaft 32b and the output shaft 37, and a torque non-transmission state where the torque is not transmitted between the first input shaft 32a, the second input shaft 32b and the output shaft 37 for each set of the gear sets.

According to the embodiment, the transmission 30 corresponds to a gear type automatic transmission which transmits the rotation torque transmitted via the engine 10 while changing the gear with the gear ratio of plural gear stages and outputs the rotation torque to a differential gear 50. The transmission 30 of the embodiment corresponds to a dog-clutch type automatic transmission which includes a first dog clutch 33a, a second dog clutch 33b, a third dog clutch 33c, and a fourth dog clutch 33d instead of including a synchronization mechanism of, for example, a synchronizer ring as a gear selector.

In a state where the respective first dog clutch 33a, the second dog clutch 33b, the third dog clutch 33c, and the fourth dog clutch 33d engage with the corresponding idler gears, the engaged idler gears are brought to be relatively unrotatable with the first dog clutch 33a, the second dog clutch 33b, the third dog clutch 33c, and the fourth dog clutch 33d.

The transmission 30 includes the first input shaft 32a, the second input shaft 32b, a reverse idler gear 33r', a first drive gear 34a, a second drive gear 34b, a third drive gear 34c, a fourth drive gear 34d, a fifth driver gear 34e, a sixth drive gear 34f, a reverse drive gear 34r, a first driven gear 35a, a second driven gear 35b, a third driven gear 35c, a fourth driven gear 35d, a fifth driven gear 35e, a sixth driven gear 35f, a reverse driven gear 35r, and an output gear 38.

The transmission 30 further includes a first shift actuator 36a, a second shift actuator 36b, a third shift actuator 36c and a fourth shift actuator 36d for controlling the first dog clutch 33a, the second dog clutch 33b, the third dog clutch 33c, and the fourth dog clutch 33d, respectively.

The first input shaft 32a serves as a shaft which receives the rotation torque transmitted via the engine 10 and integrally rotates with the clutch disc 22 of the clutch 20. The rotation torque transmitted via the first input shaft 32a is transmitted to the second input shaft 32b by the plural gears (for example, the fifth drive gear 34e, the fifth driven gear 35e) which are meshed with each other.

The output shaft 37 serves as a shaft which transmits the rotation torque to a driving wheel, and is positioned in parallel with the first input shaft 32a and the second input shaft 32b. The respective first input shaft 32a, the second input shaft 32b and the output shaft 37 are rotatably and axially supported by a housing of the transmission 30.

The fifth drive gear 34e corresponds to a fixed gear which is fixed to the first input shaft 32a in a relatively unrotatable manner, and corresponds to a gear which is configured to directly connect to the output shaft 37 using the third dog clutch 33c. Further, the fifth driven gear 35e serves as a fixed gear which is fixed to the second input shaft 32b in a relatively unrotatable manner.

The first drive gear 34a, the second drive gear 34b, and the reverse drive gear 34r are fixed gears which are fixed to the second input shaft 32b in a relatively unrotatable manner. The third drive gear 34c, the fourth drive gear 34d, and the sixth drive gear 34f are idler gears which are provided at the second input shaft 32b in a relatively rotatable manner (in a freely rotatable manner).

The first driven gear 35a, the second driven gear 35b, and the reverse driven gear 35r are idler gears which are mounted to the output shaft 37 in a relatively rotatable manner (in a freely rotatable manner). The third driven gear 35c, the fourth driven gear 35d and the output gear 38 are fixed gears which are fixed to the output shaft 37 in a relatively unrotatable manner.

According to the embodiment, the idler gears and the fixed gears are positioned in a manner as described above, however, the positioning is not limited to this. The idler gears and the fixed gears may be mounted by any method as long as one of the gears configuring the gear set serves as an idler gear which is relatively rotatable with the first input shaft 32a, the second input shaft 32b or the output shaft 37, whereas the other of the gears configuring the gear set serves as a fixed gear which is relatively rotatable with the first input shaft 32a, the second input shaft 32b or the output shaft 37.

The first drive gear 34a and the first driven gear 35a are meshed with each other to set a first gear stage. The second drive gear 34b and the second driven gear 35b are meshed with each other to set a second gear stage. The third drive gear 34c and the third driven gear 35c are meshed with each other to set a third gear stage. The fourth drive gear 34d and the fourth driven gear 35d are meshed with each other to set a fourth gear stage. The fifth drive gear 34e and the fifth driven gear 35e are meshed with each other to set a fifth gear stage. The sixth drive gear 34f and the sixth driven gear 35f are meshed with each other to set a sixth gear stage.

As above, the transmission 30 includes a gear meshing mechanism in which at least a one of the gears which configure the gear set is rotatably supported by the first input shaft 32a, the second input shaft 32b, or the output shaft 37, and the rotatable first gear is connected to the first input shaft 32a, the second input shaft 32b, or the output shaft 37 to switch from the torque non-transmission state and to the torque transmission state.

A gear diameter is greater in the order of the first drive gear 34a, the second drive gear 34b, the third drive gear 34c, the fourth drive gear 34d, the fifth driven gear 35e, and the sixth drive gear 34f. The gear diameter is smaller in the order of the first driven gear 35a, the second driven gear 35b, the third driven gear 35c, the fourth driven gear 35d, the fifth drive gear 34e, and the sixth driven gear 35f.

Accordingly, in the embodiment, the gear ratio is lower in the order of gears that set the first gear stage, gears that set the second gear stage, gears that set the third gear, gears that set the fourth gear, and gears that set the fifth gear.

An input shaft rotation speed sensor 39a is provided at the first input shaft 32a to detect the rotation speed of the first input shaft 32a. In the embodiment, an example in which the input shaft rotation speed sensor 39a is provided at, or close to the first input shaft 32a will be explained. Alternatively, the input shaft rotation speed sensor 39a may be provided at, or close to the second input shaft 32b.

An output shaft rotation speed sensor 39b is provided at, or close to the output shaft 37 to detect the rotation speed of the output shaft 37. The input shaft rotation speed sensor 39a and the output shaft rotation speed sensor 39b are communicably connected to the transmission ECU 31, and output detection signals to the transmission ECU 31.

The reverse drive gear 34r serves as a gear for reversing the vehicle and drives the reverse driven gear 35r via the reverse idler gear 33r' when the reverse drive gear 34r meshes with the reverse idler gear 33r'. The reverse drive gear 34r meshes with the reverse idler gear 33r' to be selectively connected.

The output shaft 37 serves as an output shaft which outputs the rotation torque received at the transmission 30 to the differential gear 50. The output gear 38 meshes with a ring gear of the differential gear 50 and outputs the rotation torque received at the output shaft 37 to the differential gear 50.

The transmission ECU 31 controls the driving control of the first shift actuator 36a to shift the first dog clutch 33a to the first driven gear 35a, to the second driven gear 35b, or to a first neutral position which is in a middle of the first driven gear 35a and the second driven gear 35b. In a state where the first shift actuator 36a shifts the first dog clutch 33a to the first driven gear 35a, an engaging portion of the first dog clutch 33a engages with an engaged portion of the first driven gear 35a, and the first driven gear 35a is connected to the output shaft 37 in a relatively unrotatable manner via the first dog clutch 33a to set the first gear stage. In a state where the first shift actuator 36a shifts the first dog clutch 33a to the second driven gear 35b, the engaging portion of the first dog clutch 33a engages with an engaged portion of the second driven gear 35b, and the second driven gear 35b is connected to the output shaft 37 in a relatively unrotatable manner via the first dog clutch 33a to set the second gear stage. In a state where the first shift actuator 36a disengages the first dog clutch 33a from the first driven gear 35a or the second driven gear 35b which are engaged with the first dog clutch 33a, and shifts the first dog clutch 33a to the first neutral position, both the first driven gear 35a and the second driven gear 35b are brought into a neutral state to be relatively rotatable with the output shaft 37.

The transmission ECU 31 controls the drive control of the second shift actuator 36b to shift the second dog clutch 33b to the third drive gear 34c, to the fourth drive gear 34d, or to a second neutral position which is in a middle of the third drive gear 34c and the fourth drive gear 34d. In a state where the second shift actuator 36b shifts the second dog clutch 33b to the third drive gear 34c, an engaging portion of the second dog clutch 33b engages with an engaged portion of the third drive gear 34c, and the third drive gear 34c is connected to the second input shaft 32b in a relatively unrotatable manner via the second dog clutch 33b to set the third gear stage. In a state where the second shift actuator 36b shifts the second dog clutch 33b to the fourth drive gear 34d, the engaging portion of the second dog clutch 33b engages with an engaged portion of the fourth drive gear 34d, and the fourth drive gear 34d is connected to the second input shaft 32b in a relatively unrotatable manner via the second dog clutch 33b to set the fourth gear stage. In a state where the second shift actuator 36b disengages the second dog clutch 33b from the third drive gear 34c or the fourth drive gear 34d, and shifts the second dog clutch 33b to the second neutral position, both the third drive gear 34c and the fourth drive gear 34d are brought into a neutral state to be relatively rotatable with the second input shaft 32b.

The transmission ECU 31 operates the drive control of third shift actuator 36c to shift the third dog clutch 33c to the fifth drive gear 34e, to the reverse driven gear 35r, or to a third neutral position which is away from the fifth drive gear 34e and the reverse drive gear 35r. In a state where the third shift actuator 36c shifts the third dog clutch 33c to the fifth drive gear 34e, the engaging portion of the third dog clutch 33c engages with an engaged portion of the fifth drive gear 34e, and the fifth drive gear 34e is connected to the output shaft 37 in a relatively unrotatable manner via the third dog clutch 33c to set the fifth gear stage.

The reverse idler gear 33r' is axially supported by the housing of the transmission 30 in an axially movable manner and in a rotatable manner. The reverse idler gear 33r' meshes with both the reverse drive gear 34r and the reverse driven gear 35r in a state where the vehicle moves backward. In a state where the third shift actuator 36c shifts the third dog clutch 33c to the reverse driven gear 35r, the engaging portion of the third dog clutch 33c engages with an engaged portion of the reverse driven gear 35r, and the reverse driven gear 35r is connected to the output shaft 37 in a relatively unrotatable manner via the third dog clutch 33c to set a configuration to move the vehicle backward. In a state where the third shift actuator 36c disengages the third dog clutch 33c from the fifth drive gear 34e or the reverse driven gear 35r, and shifts the third dog clutch 33c to the third neutral position, both the fifth drive gear 34e and the reverse driven gear 35r are brought into a neutral state to be relatively rotatable with the first input shaft 32a.

The transmission ECU 31 operates the drive control of the fourth shift actuator 36d to shift the fourth dog clutch 33d to the sixth drive gear 34f, or to a fourth neutral position which is away from sixth drive gear 34f. In a state where the fourth shift actuator 36d shifts the fourth dog clutch 33d to the sixth drive gear 34f, an engaging portion of the fourth dog clutch 33d engages with an engaged portion of the sixth drive gear 34f, and the sixth drive gear 34f is connected to the second input shaft 32b in a relatively unrotatable manner via the fourth dog clutch 33d to set the sixth gear stage. In a state where the fourth shift actuator 36d disengages the fourth dog clutch 33d from the sixth drive gear 34f, and shifts the fourth dog clutch 33d to the fourth neutral position, the sixth drive gear 34d is brought into a neutral state to be relatively rotatable with the second input shaft 32b.

As such, the first shift actuator 36a, the second shift actuator 36b, the third shift actuator 36c, and the fourth shift actuator 36d serve as an operation mechanism which operates the gear meshing mechanism.

The differential gear 50 serves as a device which transmits the rotation torque being input from the output shaft 37 of the transmission 30 to driving wheels WI, Wr in a differentially movable manner. The differential gear 50 includes a ring gear which meshes with the output gear 38 and a drive gear. By such a configuration, the output shaft 37 is rotatably connected to the driving wheels WI, Wr.

The engine ECU 11 serves as an electric control device which controls the engine 10. The transmission ECU 31 is an electric control device which controls the transmission 30. The transmission ECU 31 is provided with a memory portion which includes, for example, an input-output interface, a CPU, a RAM, a ROM and a non-volatile memory which are connected to the transmission ECU 31 via a bus. The information may be sent and received between the engine ECU 11 and the transmission ECU 31.

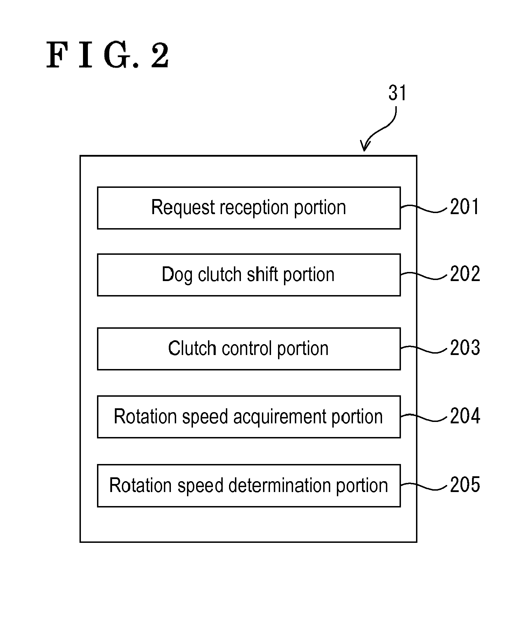

The transmission ECU 31 controls a gear change using the first dog clutch 33a, the second dog clutch 33b, the third dog clutch 33c, and the fourth dog clutch 33d. As shown in Fig. 2, the transmission ECU 31 according to the embodiment operates a request reception portion 201, a dog clutch shift portion 202, a clutch control portion 203, a rotation speed acquirement portion 204 and a rotation speed determination portion 205 by executing a program which is stored in the memory portion.

The request reception portion 201 receives a request for performing the gear-change operation in a state where the gear-change operation is performed by an operator. The request reception portion 201 controls a down-shift operation in a state where the request for the down-shift operation is received. In the embodiment of this disclosure, an up-shift operation will not be explained.

The rotation speed acquirement portion 204 receives detection signals from the input shaft rotation speed sensor 39a and detects the rotation speed of the first input shaft 32a. The rotation speed acquirement portion 204 receives detection signals from the output shaft rotation speed sensor 39b and detects the rotation speed of the output shaft 37.

The rotation speed acquirement portion 204 detects the rotation speed of the engine 10 from the engine ECU 11.

In a state where the clutch 20 is engaged, or in a state where the first dog clutch 33a, the second dog clutch 33b, the third dog clutch 33c, and the fourth dog clutch 33d are engaged with the corresponding gears, the rotation speed determination portion 205 determines a timing to engage the clutch 20, or engage the first dog clutch 33a, the second dog clutch 33b, the third dog clutch 33c, and the fourth dog clutch 33d with the corresponding gears based on the rotation speed of the first input shaft 32a and the rotation speed of the engine 10 acquired by the rotation speed acquirement portion 204.

The dog clutch shift portion 202 controls the first shift actuator 36a, the second shift actuator 36b, the third shift actuator 36c and the fourth shift actuator 36d to shift the first dog clutch 33a, the second dog clutch 33b, the third dog clutch 33c, and the fourth dog clutch 33d.

The clutch control portion 203 controls the clutch actuator 29 to control the clutch 20.

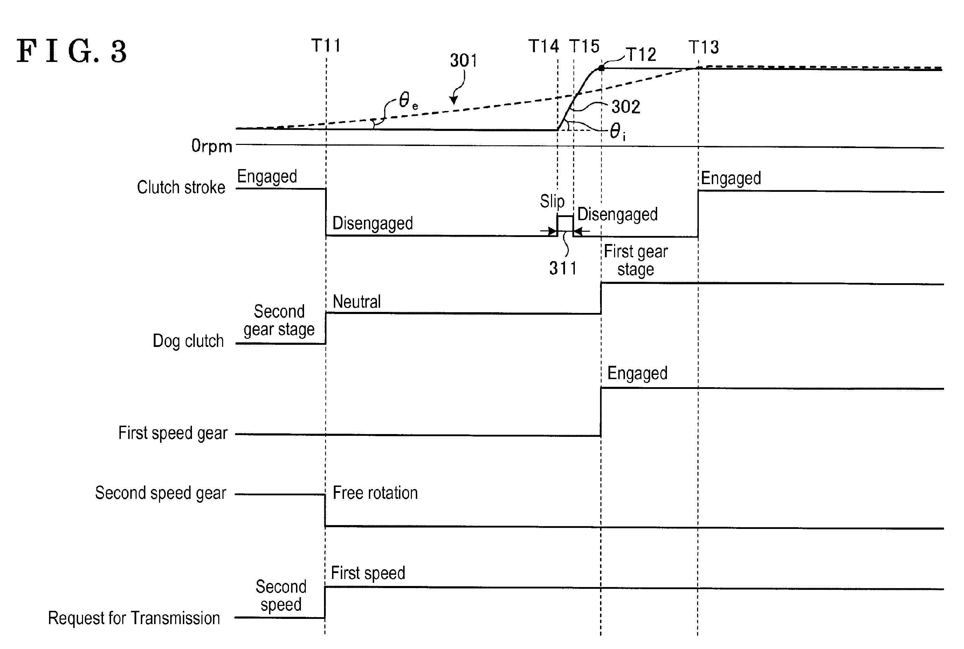

Next, a control operated by the driving apparatus 100 for the vehicle of the embodiment at a down-shift operation will be explained. In a timing chart shown in Fig. 3, a case where the down-shift operation from the second gear stage to the first gear stage is performed will be explained. However, it is not limited to the case where the down-shift operation from the second gear stage to the first gear stage is performed, and the control by the driving apparatus 100 for the vehicle is applicable to any down-shift operation.

In the timing chart shown in Fig. 3, a rotation speed 301 of the driving shaft 12 of the engine 10 and a rotation speed 302 of the first input shaft 32a are shown.

According to an example shown in Fig. 3, the control to increase the rotation speed 301 of the driving shaft 12 of the engine 10 is started to perform the down-shift operation. Then, the request reception portion 201 receives the request for changing the gear from the second gear stage to the first gear stage at a time T11.

Then, in response to the reception of the request for changing the gear, the dog clutch shift portion 202 operates the first shift actuator 36a to shift the position of the first dog clutch 33a to the neutral position by disengaging the first dog clutch 33a from the second driven gear 35b. Accordingly, the second speed gear (the second driven gear 35b according to the embodiment) is brought to be from an engaged state to a freely-rotatable state. The dog clutch shift portion 202 controls the second speed gear to be in the freely-rotatable state so that a torque non-transmited state where the torque is not transmitted is established between the first input shaft 32a and the output shaft 37.

In a similar way, in response to the reception of the request for changing the gear, the clutch control portion 203 controls the clutch actuator 29 to change a clutch stroke of the clutch 20 and to shift the clutch 20 from the engaged state to the disengaged state.

Accordingly, while the rotation speed 301 of the driving shaft 12 of the engine 10 increases, the first input gear 32a is brought into a freely-rotational state where the rotation torque is not transmitted from the driving shaft 12. Then, when the rotation speed 301 of the driving shaft 12 of the engine 10 increases to a sufficient level, the clutch 20 is controlled to be engaged again.

According to the embodiment, an example in which the rotation speed determination portion 205 determines a timing based on the rotation speed 301 of the driving shaft 12 of the engine 10 detected by the engine rotation speed sensor 13, the timing that the rotation speed 301 of the driving shaft 12 of the engine 10 increases to a sufficient level will be explained, however is not limited to the aforementioned method.

At a time T14 when the rotation speed 301 of the driving shaft 12 of the engine 10 increases to a sufficient level, the clutch control portion 203 controls the clutch actuator 29 to slip the clutch 20. Accordingly, the first input shaft 32a is brought in to a state where the rotation torque is transmitted from the driving shaft 12, and the rotation speed 302 of the first input shaft 32a which was in a freely-rotational state increases to reach the rotation speed 301 of the driving shaft 12 of the engine 10. Here, the clutch control portion 203 controls the clutch 20 to be engaged to increase a degree of a first gradient θi which shows the acceleration of the rotation speed 302 of the first input shaft 32a to be greater than a degree of a second gradient θe which shows the acceleration of the rotation speed 301 of the driving shaft 12 of the engine 10.

At a time T15 before the rotation speed 302 of the first input shaft 32a accords with the rotation speed 301 of the driving shaft 12 of the engine 10, the clutch control portion 203 controls the clutch 20 to be disengaged and brings the first input shaft 32a into a state where the rotation torque is not transmitted from the driving shaft 12. Thus, the first input shaft 32a is brought into a freely-rotational state again. However, at a stage immediately before the first input shaft 32a is brought into the free-rotational state, the first gradient θi which shows the acceleration of the rotation speed 302 of the first input shaft 32a is greater than the second gradient θe which shows the acceleration of the rotation speed 301 of the driving shaft 12. Thus, inertial force generated within a term 311 which is between the time T14 and the time 15 until the first input shaft 32a is brought into a free-rotational state raises the rotation speed 302 of the first input shaft 32a to be greater than the rotation speed 301 of the driving shaft 12 of the engine 10, and make the rotation speed 302 of the first input shaft 32a reach the rotation speed which allows the first input shaft 32a to connect to the first driven gear 35a.

The clutch control portion 203 of the embodiment calculates the term 311 in advance so that the rotation speed 302 of the first input shaft 32a reaches the rotation speed which allows the first input shaft 32a to connect to the first driven gear 35a. The term 311 is calculated by the clutch control portion 203 by referring the acceleration of the rotation speed 301 of the driving shaft 12 of the engine 10 (a difference between the rotation speed 301 of the driving shaft 12 of the engine 10 detected at the preceding operation and the rotation speed 301 of the driving shaft 12 of the engine 10 detected at the current operation) and the targeted rotation speed 302 of the first input shaft 32a (for example, the rotation speed which allows the first input shaft 32a to connect to the first driven gear 35a). According to the embodiment, a term calculation map for helping calculate the term 311 by referring the acceleration of the rotation speed 301 of the driving shaft 12 of the engine 10 (the difference between the rotation speed 301 of the driving shaft 12 of the engine 10 detected at the preceding operation and the rotation speed 301 of the driving shaft 12 of the engine 10 detected at the current operation) and the targeted rotation speed 302 of the first input shaft 32a (for example, the rotation speed which allows the first input shaft 32a to connect to the first driven gear 35a) is provided within a memory portion of the transmission ECU 31.

The clutch control portion 203 refers to the term calculation map and derives the term 311 from the acceleration of the rotation speed 301 of the driving shaft 12 of the engine 10 (the difference between the rotation speed 301 of the driving shaft 12 of the engine 10 detected at the preceding operation and the rotation speed 301 of the driving shaft 12 of the engine 10 detected at the current operation) and the targeted rotation speed 302 of the first input shaft 32a, the targeted number which is defined based on the gear ratio of the transmission to be shifted to (the rotation speed which allows the first input shaft 32a to connect to the first driven gear 35a).

However, the clutch 20 needs to be disengaged at least before the rotation speed 302 of the first input shaft 32a accords with the rotation speed 301 of the driving shaft 12 of the engine 10 in order to raise the rotation speed 302 of the first input shaft 32a to be greater than the rotation speed 301 of the driving shaft 12 of the engine 10 by the inertial force. In other words, the term 311 is assumed to be shorter than the time when the rotation speed 302 of the first input shaft 32a reaches the rotation speed 301 of the driving shaft 12 of the engine 10.

While the rotation speed 302 of the first input shaft 32a is greater than the rotation speed 301 of the driving shaft 12 of the engine 10 by the inertial force which is generated after the clutch 20 is disengaged, the rotation speed determination portion 205 determines whether the rotation speed 302 of the first input shaft 32a reaches the predetermined rotation speed which allows the first dog clutch 33a to engage with the first driven gear 35a. In a state where the rotation speed 302 of the first input shaft 32a reaches the predetermined rotation speed which allows the first dog clutch 33a to engage with the first driven gear 35a, the dog clutch shift portion 202 operates the first shift actuator 36a to shift the first dog clutch 33a to the first driven gear 35a. According to the example shown in Fig. 3, the rotation speed 302 of the first input shaft 32a is assumed to reach the rotation speed which allows the first dog clutch 33a to engage with the first driven gear 35a at a time T12.

According to the embodiment, in a state where the rotation speed of the first driven gear 35a which synchronously rotates with the first input shaft 32a substantially accords with the rotation speed of the output shaft 37, the rotation speed is assumed to allow the first dog clutch 33a to engage with the first driven gear 35a. The first driven gear 35a rotates by the rotation torque transmitted from the first input shaft 32a. Accordingly, whether the first dog clutch 33a may engage with the first driven gear 35a may be determined by referring to the rotation speed of the first input shaft 32a. In addition, whether the first dog clutch 33a may engage with the first driven gear 35a may be determined by the rotation speed determination portion 205 based on the rotation speed 302 of the first input shaft 32a detected by the input shaft rotation speed sensor 39a and the rotation speed of the output shaft 37 detected by the output shaft rotation speed sensor 39b.

At the time T12, the dog clutch shift portion 202 operates the first shift actuator 36a to shift the position of the first dog clutch 33a from the neutral position to establish the first speed (i.e., to the first driven gear 35a) to bring the gear which establishes the first speed (i.e., the first driven gear 35a) into the engaged state. Accordingly, the engagement of the output shaft 37 which rotates by greater rotation speed than the rotation speed 301 of the driving shaft 12 with the gear which establishes the first speed (i.e., the first driven gear 35a) is completed. In other words, the torque comes to be transmitted between the first input shaft 32a and the output shaft 37.

After the gear establishing the first speed (i.e., the first driven gear 35a) and the output shaft 37 are connected to each other, the rotation speed 301 of the driving shaft 12 increases as the rotation torque transmitted via the engine 10 increases. Then, at a time T13, the rotation speed determination portion 205 determines whether the rotation speed 301 of the driving shaft 12 reaches the rotation speed which allows the rotation torque to be transmitted to the gear establishing the first speed (i.e., the first driven gear 35a), the gear which is connected to the first input shaft 32 based on the rotation speed 302 of the first input shaft 32a and the rotation speed 301 of the driving shaft 12 of the engine 10. In a state where the rotation speed 301 of the driving shaft 12 reaches the rotation speed which allows the rotation torque to be transmitted, in other words, the rotation speed which allows the driving shaft 12 to connect to the first input shaft 32a via the clutch 20, the clutch control portion 203 controls the clutch actuator 29 to engage the clutch 20. Accordingly, the down-shift operation is completed. As such, because the clutch 20 may be engaged in a state where the rotation speed of the driving shaft 12 reaches the rotation speed of the first input shaft 32a of the engine 10, the clutch 20 is prevented from being wearing out.

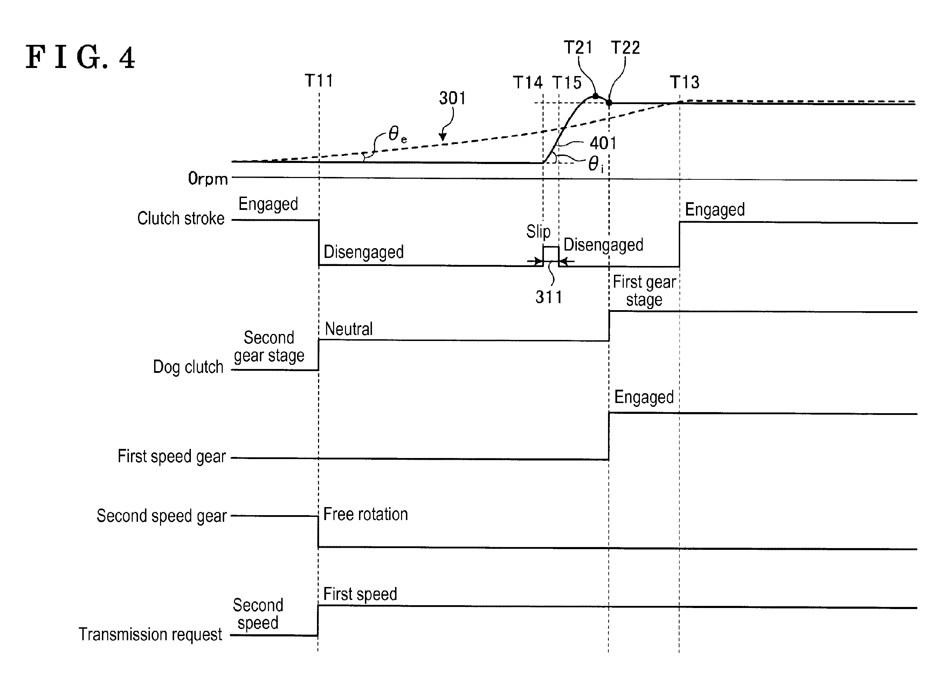

According to the aforementioned example shown in Fig. 3, the example in which the first input shaft 32a connects to the first dog clutch 33a at the time when the rotation speed 302 of the first input shaft 32a increases is explained, however, is not limited to the timing when the rotation speed 302 of the first input shaft 32a increases. In Fig. 4, an example in which the first input shaft 32a connects to the first dog clutch 33a at the time when the rotation speed 302 of the first input shaft 32a starts decreasing after increasing will be explained.

In a timing chart shown in Fig. 4, the rotation speed 301 of the driving shaft 12 of the engine 10 and the rotation speed 401 of the first input shaft 32a are shown. The rotation speed 301 of the driving shaft 12 of the engine 10 transits similarly to the transition of the rotation speed 301 of the driving shaft 12 of the engine 10 shown in Fig. 3.

In the timing chart shown in Fig. 4, a process similar to the process in Fig. 3 is operated until the clutch control portion 203 controls the clutch 20 to be disengaged at the time T15. According to an example shown in Fig. 4, the rotation speed 401 of the first input shaft 32a comes to be greater than the rotation speed 301 of the driving shaft 12 of the engine 10, and at a time T21, the rotation speed 401 of the first input shaft 32a comes to be a maximum. Then, after the time T21, the rotation speed 401 of the first input shaft 32a starts decreasing. While the rotation speed 401 of the first input shaft 32a decreases after the time T21, the rotation speed determination portion 205 determines whether the rotation speed 401 of the first input shaft 32a reaches the rotation speed which allows the first dog clutch 33a to engage with the first driven gear 35a. In a state where the rotation speed determination portion 205 determines that the rotation speed 401 of the first input shaft 32a reaches the rotation speed which allows the first dog clutch 33a to engage with the first driven gear 35a, the dog clutch shift portion 202 operates the first shift actuator 36a to shift the first dog clutch 33a to the first driven gear 35a. According to the example shown in Fig. 4, at a time T22, the rotation speed 401 of the first input shaft 32a is assumed to reach the rotation speed which allows the first dog clutch 33a to engage with the first driven gear 35a.

At the time T21, the dog clutch shift portion 202 operates the first shift actuator 36a to shift the position of the first dog clutch 33a from the neutral position to the gear establishing the first speed (i.e., the first driven gear 35a), and the gear which establishes the first speed (the first driven gear 35a) into the engaged state. The process hereinafter is assumed to be similar to the process in Fig. 3 and will not be explained.

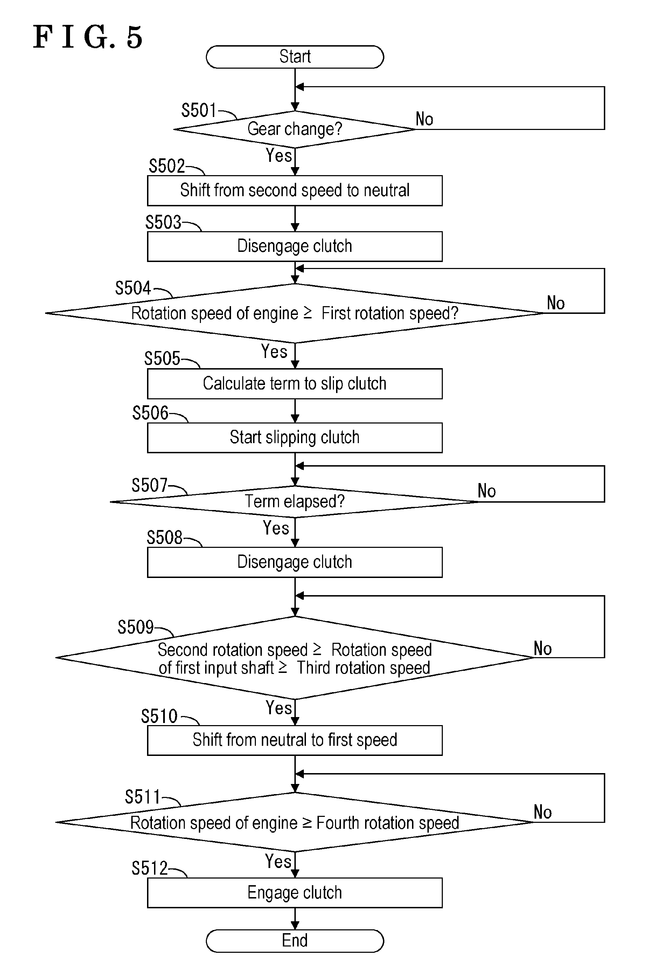

Next, the down-shift control operated by the driving apparatus 100 for the vehicle according to the embodiment will be explained. A flowchart shown in Fig. 5 explains an example of the down-shift operation from the second gear stage to the first gear stage, however is not limited to the down-shift operation from the second gear stage to the first gear stage, and the control by the driving apparatus 100 for the vehicle is applicable to any down-shift operation.

First, the request reception portion 201 determines whether the gear-change operation to downshift the gear is intended (Step S501). In a state where the gear-change operation to downshift the gear is not received (No in Step S501), the request reception portion 201 operates the determination process continuously until the gear-change operation is received.

On the other hand, in a state where the gear-shift operation is received (Yes in Step S501), the dog clutch shift portion 202 operates the first shift actuator 36a to shift the first dog clutch 33a from the second speed gear to the neutral position (Step S502).

Next, the clutch control portion 203 controls the clutch actuator 29 to disengage the clutch 20 (Step S503).

After the clutch 20 is disengaged, the rotation speed determination portion 205 determines whether the rotation speed 301 of the driving shaft 12 of the engine 10 increases and reaches the rotation speed which is equal to or greater than a first rotation speed (Step S504). In a state where the rotation speed does not reach the rotation speed which is equal to or greater than the first rotation speed (No in Step S504), the Step S504 is repeatedly operated. The first rotation speed corresponds to a threshold value which is predetermined as the rotation speed which allows the clutch 20 to slip.

On the other hand, in a state where the rotation speed determination portion 205 determines that the rotation speed 301 of the driving shaft 12 of the engine 10 reaches the rotation speed equal to or greater than the first rotation speed (Yes in Step S504), the clutch control portion 203 calculates the required term 311 at which the clutch 20 slips, the term 311 which is required to make the rotation speed 302 of the first input shaft 32a reach the rotation speed which allows the first dog clutch 33a to engage with the first driven gear 35a (Step S505). The calculation method of the term 311 is described as above and will not be explained.

The clutch control portion 203 controls the clutch actuator 29 to start the clutch 20 to slip (Step S506).

Then, the clutch control portion 203 determines whether the term 311 at which the clutch 20 slips has elapsed. (Step S507). In a state where the term 311 has not elapsed (No in Step S507), the Step S507 is repeatedly operated.

On the other hand, in a state where the rotation speed determination portion 205 determines that the term 311 has elapsed (Yes in Step S507), the clutch control portion 203 controls the clutch actuator 29 to disengage the clutch 20 (Step S508). As described above, the rotation speed 302 of the first input shaft 32a increases continuously by the inertial force even after the clutch 20 is disengaged.

Next, the rotation speed determination portion 205 determines whether the rotation speed 302 (shown in Fig. 3) of the first input shaft 32a is equal to or lower than a second rotation speed which is the rotation speed of the first input shaft 32a allowing the first dog clutch 33a to engage with the first driven gear 35a, and reaches the rotation speed which is equal to or greater than a third rotation speed which is the rotation speed of the first input shaft 32a allowing the rotation speed of the first dog clutch 33a to be greater than the rotation speed of the first driven gear 35a (Step S509). In a state where the rotation speed determination portion 205 determines that the rotation speed 302 of the first input shaft 32a is equal to or lower than the second rotation speed and does not reach the rotation speed which is equal to or greater than the third rotation speed (No in Step S509), the Step S508 is repeatedly operated.

On the other hand, in a state where the rotation speed determination portion 205 determines that the rotation speed 302 of the first input shaft 32a is equal to or lower than the second rotation speed and reaches the rotation speed which is equal to or greater than the third rotation speed (Yes in Step S509), the dog clutch shift portion 202 operates the first shift actuator 36a to shift the position of the first dog clutch 33a from the neutral position to establish the first speed (i.e., to the first driven gear 35a) (Step S510).

Next, the rotation speed determination portion 205 determines whether the rotation speed 301 of the driving shaft 12 of the engine 10 reaches the rotation speed which is equal to or greater than a fourth rotation speed which allows the driving shaft 12 to connect to the first input shaft 32a (Step S511). In a state where the rotation speed determination portion 205 determines that the rotation speed 301 of the driving shaft 12 of the engine 10 does not reach the fourth rotation speed (No in Step S511), the Step S510 is repeatedly operated.

On the other hand, in a state where the rotation speed determination portion 205 determines that the rotation speed 301 of the driving shaft 12 of the engine 10 reaches the rotation speed which is equal to or greater than the fourth rotation speed (Yes in Step S511), the clutch control portion 203 controls the clutch actuator 29 to engage the clutch 20 (Step S512).

According to the embodiment, the example in which the clutch 20 slips in order to increase the rotation speed 302 of the first input shaft 32a after the gear is shifted for the down-shift operation and the first dog clutch 33a is released is explained. Accordingly, because the rotation speed 302 of the first input shaft 32a which is different from the rotation speed 301 of the driving shaft 12 of the engine 10 may increase desirably, the dog clutch may be easily engaged with the corresponding gear. However, the clutch 20 is not limited to slip in order to increase the rotation speed 302 of the first input shaft 32a, and alternatively, the clutch 20 may be engaged completely. Further, a level of the engagement may be differentiated in accordance with vehicle speed.

According to the embodiment, the example in which the timing to engage the clutch 20 is determined based on the rotation speed 302 of the first input shaft 32a is explained, however is not limited to a case where the timing to engage the clutch 20 is determined based only on the rotation speed 302 of the first input shaft 32a. For example, the timing to engage the clutch 20 may be determined based on the difference between the rotation speed 302 of the first input shaft 32a and the rotation speed of the output shaft 37.

Because the known driving apparatus 100 for the vehicle is required to accord the rotation speed of the dog clutch with the rotation speed of the corresponding gear in a state where the down-shift operation is operated and the dog clutch engages with the corresponding gear. Accordingly, the fuel efficiency decreases in a state where the rotation speed of the engine is adjusted. According to the embodiment, the rotation speed 302 of the first input shaft 32a increases before the rotation speed 301 of the driving shaft 12 of the engine 10 increases by the inertial force applied by the slipping of the clutch 20 to engage the dog clutch with the corresponding gear. Accordingly, the rotation speed 301 of the driving shaft 12 of the engine 10 does not have to increase suddenly, leading to increase the fuel efficiency.

The known driving apparatus 100 for the vehicle generates a great level of inertia due to the rotational difference between the dog clutch and the corresponding gear when the dog clutch is connected with the corresponding gear. According to the embodiment, the aforementioned configuration prevents the inertia from generating and the vehicle is prevented from shaking. Thus, the durability of the driving apparatus 100 for the vehicle may increase.

According to the embodiment, the example of the driving apparatus 100 for the vehicle which is provided with the dog clutch which does not include the synchronization mechanism of, for example, the synchronizer ring as the gear selector is explained. Alternatively, the driving apparatus 100 for the vehicle may also be applied to an automatic transmission which includes the synchronization mechanism of, for example, the synchronizer ring. Even in this case, the aforementioned control reduces the time to bring the first input shaft 32a. the second input shaft 32b, and the output shaft 37 into a torque transmission state (connected state with the gear) after the first input shaft 32a, the second input shaft 32b, and the output shaft 37 were brought into a torque non-transmission state in a state where the gear is shifted. Accordingly, the gear may be shifted with greater efficiency.

According to the aforementioned embodiment, the rotation torque transmitted via the engine 10 may be increased while controlling the first input shaft 32a, the second input shaft 32b, and the output shaft 37 for bringing into the torque transmission state at the transmission 30. While the rotation speed 302 of the first input shaft 32a increases greater than the rotation speed 301 of the driving shaft 12 by using the inertial force, the first input shaft 32a, the second input shaft 32b, and the output shaft 37 may be brought into the torque transmission state speedily by connecting the first input shaft 32a and the second input shaft 32b to the gear. Accordingly, the time to shift the gear may be reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving apparatus (100) for a vehicle, comprising:
a transmission mechanism (30) including a plurality of gear sets having different gear ratios and being positioned between an input shaft (32a, 32b) and an output shaft (37), the transmission mechanism (30) switching a torque transmission state where the torque is transmitted between the input shaft (32a, 32b) and the output shaft (37), and a torque non-transmission state where the torque is not transmitted between the input shaft (32a, 32b) and the output shaft (37) for each set of the gear sets;
a clutch (20) changing a transmission state of a rotation torque between the input shaft (32a, 32b) of the transmission mechanism (30) and a driving shaft (12) to which the rotation torque is supplied from a driving source (10); and
a control portion (31) establishing the torque transmission state between the input shaft (32a, 32b) and the output shaft (37) by connecting the input shaft (32a, 32b) to a gear (33', 34a, 34b, 34c, 34d, 34e, 34f, 34r, 35a, 35b, 35c, 35d, 35e, 35f, 35r, 38) configuring the gear set while increasing a rotation speed (302) of the input shaft (32a, 32b) to be greater than a rotation speed (301) of the driving shaft (12) by an inertial force generated at the input shaft (32a, 32b) by establishing a state where the rotation torque is not transmitted from the driving shaft (12) to the input shaft (32a, 32b) before the rotation speed (302) of the input shaft (32a, 32b) accords with the rotation speed (301) of the driving shaft (12) after establishing a state where the rotation torque is transmitted from the driving shaft (12) to the input shaft (32a, 32b) using the clutch (20) in a state where the control portion (31) increases the rotation torque transmitted via the driving shaft (12) after establishing the state where the rotation torque is not transmitted from the driving shaft (12) to the input shaft (32a, 32b) using the clutch (20) at the transmission mechanism (30).

2. The driving apparatus (100) for the vehicle according to claim 1, wherein the transmission mechanism (30) includes a dog clutch (33a, 33b, 33c, 33d) in a gear meshing mechanism wherein at least one of the selected gears (33', 34a, 34b, 34c, 34d, 34e, 34f, 34r, 35a, 35b, 35c, 35d, 35e, 35f, 35r, 38) configuring the gear set is rotatably supported by the input shaft (32a, 32b) or the output shaft (37), and the gear meshing mechanism wherein the one rotatable gear (33', 34a, 34b, 34c, 34d, 34e, 34f, 34r, 35a, 35b, 35c, 35d, 35e, 35f, 35r, 38) is connected to the input shaft (32a, 32b) or to the output shaft (37) to switch from the torque non-transmission state to the torque transmission state.

3. The driving apparatus (100) for the vehicle according to any one of claims 1 to 2, wherein the control portion (31) establishes the state where the rotation torque is transmitted between the driving shaft (12) and the input shaft (32a, 32b) using the clutch (20) in a case where the rotation speed (301) of the driving shaft (12) reaches the rotation speed (301) which allows the driving shaft (12) to transmit the rotation torque to the gear (33', 34a, 34b, 34c, 34d, 34e, 34f, 34r, 35a, 35b, 35c, 35d, 35e, 35f, 35r, 38) configuring the gear set, the gear (33', 34a, 34b, 34c, 34d, 34e, 34f, 34r, 35a, 35b, 35c, 35d, 35e, 35f, 35r, 38) being connected to the input shaft (32a, 32b) after connecting the gear (33', 34a, 34b, 34c, 34d, 34e, 34f, 34r, 35a, 35b, 35c, 35d, 35e, 35f, 35r, 38) configuring the gear set to the input shaft (32a, 32b).

4. The driving apparatus (100) for the vehicle according to any one of claims 1 to 3, wherein the control portion (31) controls the gear (33', 34a, 34b, 34c, 34d, 34e, 34f, 34r, 35a, 35b, 35c, 35d, 35e, 35f, 35r, 38) configuring the gear set to connect to the input shaft (32a, 32b) when the rotation speed (302) of the input shaft (32a, 32b) reaches the rotation speed (302) which allows the input shaft (32a, 32b) to connect to the gear (33', 34a, 34b, 34c, 34d, 34e, 34f, 34r, 35a, 35b, 35c, 35d, 35e, 35f, 35r, 38) configuring the gear set while increasing the rotation speed (302) of the input shaft (32a, 32b) by the inertial force generated at the input shaft (32a, 32b) by establishing the state where the rotation torque is not transmitted from the driving shaft (12) to the input shaft (32a, 32b).

5. The driving apparatus (100) for the vehicle according to any one of claims 1 to 4, wherein the control portion (31) controls the gear (33', 34a, 34b, 34c, 34d, 34e, 34f, 34r, 35a, 35b, 35c, 35d, 35e, 35f, 35r, 38) configuring the gear set to connect to the input shaft (32a, 32b) when the rotation speed (302) of the input shaft (32a, 32b) reaches the rotation speed (302) which allows the input shaft (32a, 32b) to connect to the gear (33', 34a, 34b, 34c, 34d, 34e, 34f, 34r, 35a, 35b, 35c, 35d, 35e, 35f, 35r, 38) configuring the gear set while decreasing the rotation speed (302) of the input shaft (32a, 32b) after increasing by the inertial force generated at the input shaft (32a, 32b) by establishing the state where the rotation torque is not transmitted from the driving shaft (12) to the input shaft (32a, 32b).

6. The driving apparatus (100) for the vehicle according to any one of claims 1 to 5, wherein the control portion (31) transmits the rotation torque by slipping the clutch (20) in a state where the control portion (31) establishes the state where the rotation torque is transmitted from the driving shaft (12) to the input shaft (32a, 32b) using the clutch (20) after increasing the rotation torque transmitted via the driving source (10).

7. The driving apparatus (100) for the vehicle according to any one of claims 1 to 6, wherein the control portion (31) controls the clutch (20) to slip in a state where the input shaft (32a, 32b) is in a free-rotational state when downshifting the gear (33', 34a, 34b, 34c, 34d, 34e, 34f, 34r, 35a, 35b, 35c, 35d, 35e, 35f, 35r, 38) in a case where the control portion (31) increases the rotation torque transmitted via the input shaft (32a, 32b).

8. The driving apparatus (100) for the vehicle according to any one of claims 1 to 7, wherein the control portion (31) controls the clutch (20) to be engaged so as to increase a first gradient (θi) showing an acceleration of the rotation speed (302) of the input shaft (32a, 32b) to be greater than a second gradient (θe) showing an acceleration of the rotation speed (301) of the driving shaft (12).

9. The driving apparatus (100) for the vehicle according to any one of claims 1 to 8, wherein the control portion (31) controls the clutch (20) to be disengaged before the rotation speed (302) of the input shaft (32a, 32b) accords with the rotation speed (301) of the driving shaft (12).

10. The driving apparatus (100) for the vehicle according to any one of claims 1 to 9, wherein the control portion (31) controls the selected gear (33', 34a, 34b, 34c, 34d, 34e, 34f, 34r, 35a, 35b, 35c, 35d, 35e, 35f, 35r, 38) configuring the gear set to connect to the input shaft (32a, 32b) in a case where the rotation speed (301) of the input shaft (32a, 32b) decreases after increasing to a maximum degree in a case where the control portion (31) increases the rotation torque transmitted via the input shaft (32a, 32b) by slipping the clutch (20) temporarily and establishes the torque transmission state.
